# EUROPEAN PATENT APPLICATION

(11) **EP 3 336 031 A1**
(43) Date of publication of application: **20.06.2018**
(21) Application number: 17206831.4
(22) Date of filing: 12.12.2017
(51) Int. Cl.: B66B 3/00

(54) **INFORMATION PREVIEW FOR ELEVATOR PASSENGERS**

(30) Priority: 13.12.2016 US 201615377384
(71) Applicant: Otis Elevator Company, Farmington, Connecticut 06032 (US)
(72) Inventor: HSU, Arthur, East Hartford, CT Connecticut 06108 (US); PASINI, Jose Miguel, East Hartford, CT Connecticut 06108 (US); WITCZAK, Tadeusz Pawel, Farmington, CT Connecticut 06032 (US)
(74) Representative: Power, Philippa Louise

(57) **Abstract**

An elevator system (10) is provided comprising: a first elevator car compartment configured to transport passengers through a hoistway from a first location to a second location; a plurality of sensors configured to capture data, the plurality of sensors comprising at least one of a first sensor (140a) located in the first elevator compartment and a second sensor (140b) located in an elevator lobby (100); a control system (110) configured to analyze the captured data and determine information in response to the captured data; and a plurality of monitors configured to display the information from the plurality of sensors, the plurality of monitors comprising at least one of a first monitor (130a) located in the first elevator compartment and a second monitor (130b) located in the elevator lobby.

## Description

### BACKGROUND

The subject matter disclosed herein relates generally to the field of elevator systems, and specifically to a method and apparatus for conveying information to passengers inside and outside an elevator system.

Commonly, while waiting for an elevator car, occupants of a building are left guessing as to why the elevator car is delayed and who might be in the elevator car when it arrives. Passengers within the elevator car face similar questions regarding who might be waiting at the floor when they exit the elevator car. An efficient method of providing passengers with better information before they get in the elevator car and while they are in the elevator car is desired.

### BRIEF SUMMARY

According to one embodiment, an elevator system is provided. The elevator system comprising: a first elevator car compartment configured to transport passengers through a hoistway from a first location to a second location; a plurality of sensors configured to capture data, the plurality of sensors comprising at least one of a first sensor located in the first elevator compartment and a second sensor located in an elevator lobby; a control system configured to analyze the captured data and determine information in response to the captured data; and a plurality of monitors configured to display the information from the plurality of sensors, the plurality of monitors comprising at least one of a first monitor located in the first elevator compartment and a second monitor located in the elevator lobby.

In addition to one or more of the features described above, or as an alternative, further embodiments of the elevator system may include that the plurality of sensors further comprise: at least one of a third sensor located in a second elevator compartment and a fourth sensor located in the hoistway.

In addition to one or more of the features described above, or as an alternative, further embodiments of the elevator system may include that the plurality of monitors further comprise: at least one of a third monitor located in a second elevator compartment and a fourth monitor remotely connected to the plurality of sensors.

In addition to one or more of the features described above, or as an alternative, further embodiments of the elevator system may include that the data captured is at least one of video images, a still image, 3D depth data, acoustic data, weight data, and infrared thermography.

In addition to one or more of the features described above, or as an alternative, further embodiments of the elevator system may include that the displayed information is at least one of video images, a still image, a depth map, a graphical representation, textual information, a thermal image, a thermal video image, and illustrative art.

In addition to one or more of the features described above, or as an alternative, further embodiments of the elevator system may include that the fourth sensor is located outside of the first elevator compartment, outside of the second elevator compartment, and inside of the hoistway.

In addition to one or more of the features described above, or as an alternative, further embodiments of the elevator system may include that the fourth monitor is a mobile device configured to display the information.

In addition to one or more of the features described above, or as an alternative, further embodiments of the elevator system may include that the second elevator compartment is located in a second elevator car separate from the first elevator car.

In addition to one or more of the features described above, or as an alternative, further embodiments of the elevator system may include that the second elevator compartment is located in the first elevator car, the second elevator compartment being integrally attached to the first elevator compartment.

In addition to one or more of the features described above, or as an alternative, further embodiments of the elevator system may include a control device configured to disable and enable at least one of the plurality of sensors and the plurality of monitors.

In addition to one or more of the features described above, or as an alternative, further embodiments of the elevator system may include that the data captured are video images from the first sensor located in the first elevator compartment; and the displayed information are video images, the video images being displayed on the third monitor located in the second elevator compartment.

In addition to one or more of the features described above, or as an alternative, further embodiments of the elevator system may include that the displayed information includes a cartoon animation illustrating a number of passengers at a selected location using cartoon figures.

In addition to one or more of the features described above, or as an alternative, further embodiments of the elevator system may include that the displayed information includes a chart illustrating an elevator compartment occupancy status using at least one of a first color representing the percentage of unoccupied space in the elevator compartment and a second color representing the percentage of occupied space in the compartment.

According to another embodiment, a method of operating an elevator system is provides. The method comprising: transporting passengers in a first elevator compartment through a hoistway from a first location to a second location; capturing data using a plurality of sensors, the plurality of sensors comprising at least one of a first sensor located in the first elevator compartment and a second sensor located in an elevator lobby; analyzing the captured data; determining information in response to the captured data; and displaying the information from the plurality of sensors using a plurality of monitors, the plurality of monitors comprising at least one of a first monitor located in the first elevator compartment and a second monitor located in the elevator lobby.

In addition to one or more of the features described above, or as an alternative, further embodiments of the method may include that the plurality of sensors further comprise: at least one of a third sensor located in a second elevator compartment and a fourth sensor located in the hoistway.

In addition to one or more of the features described above, or as an alternative, further embodiments of the method may include that the plurality of monitors further comprise: at least one of a third monitor located in a second elevator compartment and a fourth monitor remotely connected to the plurality of sensors.

In addition to one or more of the features described above, or as an alternative, further embodiments of the method may include that the data captured is at least one of video images, a still image, 3D depth data, acoustic data, weight data, and infrared thermography.

In addition to one or more of the features described above, or as an alternative, further embodiments of the method may include that the displayed information is at least one of video images, a still image, a depth map, a graphical representation, textual information, a thermal image, a thermal video image, and illustrative art.

In addition to one or more of the features described above, or as an alternative, further embodiments of the method may include that the fourth sensor is located outside of the first elevator compartment, outside of the second elevator compartment, and inside of the hoistway.

In addition to one or more of the features described above, or as an alternative, further embodiments of the method may include that the fourth monitor is a mobile device configured to display the information.

Technical effects of embodiments of the present disclosure include an elevator system having a monitor to display elevator information including who is in the elevator car, who is waiting on the destination floor, and elevator operational information.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in anyway. With reference to the accompanying drawings, like elements are numbered alike:
FIG. 1 illustrates a schematic view of an elevator system, in accordance with an embodiment of the disclosure;
FIG. 2 illustrates a schematic view of an elevator lobby incorporating multiple elevator systems of FIG. 1, in accordance with an embodiment of the disclosure;
FIG. 3 illustrates a schematic view of a lobby monitor in an elevator lobby displaying images captured by an elevator car camera inside of an elevator car, in accordance with an embodiment of the disclosure;
FIG. 4 illustrates a schematic view of an elevator car monitor in an elevator car displaying images captured by an lobby camera in an elevator lobby, in accordance with an embodiment of the disclosure;
FIG. 5 illustrates a schematic view of an elevator car monitor in an elevator car displaying images captured by an elevator car camera in another elevator car, in accordance with an embodiment of the disclosure; and
FIG. 6 is a flow chart of method of operating an elevator system, in accordance with an embodiment of the disclosure.

### DETAILED DESCRIPTION

A detailed description of one or more embodiments of the disclosed apparatus and method are presented herein by way of exemplification and not limitation with reference to the Figures.

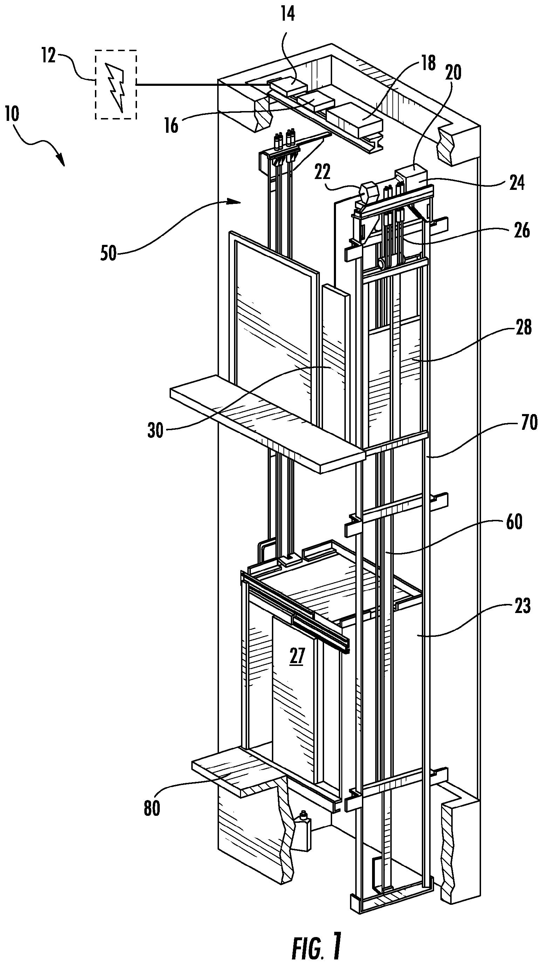

FIG. 1 shows a schematic view of an elevator system 10, in accordance with an embodiment of the disclosure. With reference to FIG. 1, the elevator system 10 includes an elevator car 23 configured to move vertically upward and downward within a hoistway 50 along a plurality of car guide rails 60. The elevator system 10 may also include a counterweight 28 operably connected to the elevator car 23 via a pulley system 26. The counterweight 28 is configured to move vertically upward and downward within the hoistway 50. The counterweight 28 moves in a direction generally opposite the movement of the elevator car 23, as is known in conventional elevator systems. Movement of the counterweight 28 is guided by counterweight guide rails 70 mounted within the hoistway 50. The elevator car 23 also has doors 27 to open and close, allowing passengers to enter and exit the elevator car 23 at a floor 80.

The elevator system 10 also includes a power source 12. The power is provided from the power source 12 to a switch panel 14, which may include circuit breakers, meters, etc. From the switch panel 14, the power may be provided directly to the drive unit 20 through the controller 30 or to an internal power source charger 16, which converts AC power to direct current (DC) power to charge an internal power source 18 that requires charging. For instance, an internal power source 18 that requires charging may be a battery, capacitor, or any other type of power storage device known to one of ordinary skill in the art. Alternatively, the internal power source 18 may not require charging from the AC external power source 12 and may be a device such as, for example a gas powered generator, solar cells, hydroelectric generator, wind turbine generator or similar power generation device. The internal power source 18 may power various components of the elevator system 10 when an external power source is unavailable. The drive unit 20 drives a machine 22 to impart motion to the elevator car 23 via a traction sheave of the machine 22. The machine 22 also includes a brake 24 that can be activated to stop the machine 22 and elevator car 23. As will be appreciated by those of skill in the art, FIG. 1 depicts a machine room-less elevator system 10, however the embodiments disclosed herein may be incorporated with other elevator systems that are not machine room-less or that include any other known elevator configuration. In addition, elevator systems having more than one independently operating elevator car in each elevator shaft and/or ropeless elevator systems may also be used. In one embodiment, the elevator car may have two or more compartments.

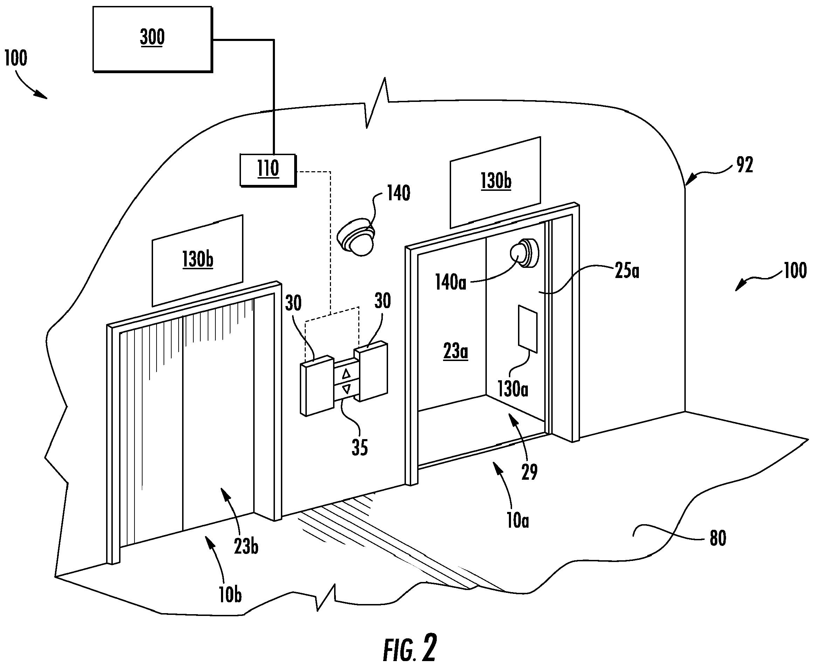

The controller 30 is responsible for controlling the operation of the elevator system 10. The controller 30 may be tied to a control system 110 (FIG. 2), which is responsible for controlling multiple elevator systems 10 and will be discussed below. The controller 30 may also determine a mode (motoring, regenerative, near balance) of the elevator car 23. The controller 30 may use the car direction and the weight distribution between the elevator car 23 and the counterweight 28 to determine the mode of the elevator car. The controller 30 may adjust the velocity of the elevator car 23 to reach a target floor. The controller 30 may include a processor and an associated memory. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

Referring now to FIGs. 2-4, which illustrate a plurality of sensors configured to capture data, a control system 110 configured to analyze the captured data and determine information, and a plurality of monitors configured to display the information determined by the controller 110. As may be appreciated by one of skill in the art each individual controller 30 may also be configured to analyze the captured data and determine the information. In the illustrated embodiment, the plurality of sensors comprise at least one of a first sensor 140a located in a first elevator compartment 25a, a third sensor 140c located in a second elevator compartment 25b, a second sensor 140b located in an elevator lobby 100, and a fourth sensor 140d located in the hoistway 50. The data captured by the plurality of sensors may be at least one of video images, a still image, 3D depth data, acoustic data, weight data, and infrared thermography.

In the illustrated embodiment, the plurality of monitors comprise at least one of a first monitor 130a located in the first elevator compartment 25a, a third monitor 130c located in the second elevator compartment 25b, a second monitor 130b located in the elevator lobby 100, and a fourth monitor 130d remotely connected to the plurality of sensors. The displayed information is at least one of video images, a still image, a depth map, a graphical representation, textual information, a thermal image, a thermal video image, and illustrative art. The monitors 130a-130d may be a display screen such as, for example a computer monitor, a television screen, or a patterned sign with backlights to illuminate different parts of the sign. The monitors 130a-130d may also be a mobile device, such as, for example, a cellular phone, a smart watch, a tablet, a laptop computer or similar device known to one of skill in the art.

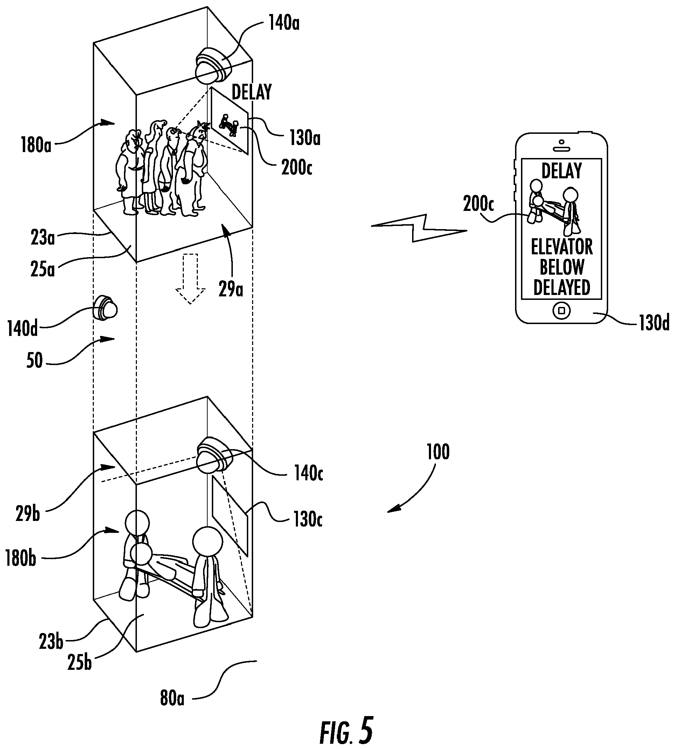

FIG. 2 shows a view of an elevator lobby 100 on a floor 80. The lobby 100 includes an elevator bank 92 having one or more elevator systems 10a, 10b. FIG. 2 shows two elevators systems 10a, 10b, each having their own elevator cars 23, which may be referred to as a first elevator car 23a and a second elevator car 23b. As may be appreciated by one of skill in the art a single elevator system may have multiple elevator cars within the same hoistway including a first elevator car and a second elevator car, as shown in FIG. 5. The lobby 100 also includes an elevator call button 35. The elevator call button 35 sends an elevator call to the control system 110. The elevator call button 30 may be a push button and/or a touch screen and may be activated manually or automatically. For example, the elevator call button 35 may be activated by a building occupant pushing the elevator call button 35. The elevator call button 35 may also be activated using voice recognition or a passenger detection mechanism in the lobby 100, such as, for example a weight sensing device, a visual recognition device, and a laser detection device. Alternatively, an elevator call may be transmitted to the controller 110 using a mobile device 130d. The lobby 100 also includes the second sensor 140b configured to capture data of the lobby 100. In an embodiment, each elevator system 10 may have one or more dedicated third sensors 140c. In another embodiment, there may be one second sensor 140b for each lobby 100, which is shared by multiple elevator systems 10.

Additionally, each elevator car 23a, 23b also includes at least one sensor 140a, 140c configured to capture data from the interior 29a, 29b of the elevator car 23a, 23b. The first sensor 140a is located inside the first elevator compartment 25a. The third sensor 140c is located inside the second elevator compartment 25b. The interior 29a, 29b of each elevator car 23a, 23b is defined by each elevator car compartment 25a, 25b. The elevator compartments may be referred to as a first elevator compartment 25a, second elevator compartment 25b, and so on. As mentioned above, the elevator car may have more than one compartment, such as, for example in a double-deck elevator where the second elevator compartment is integrally attached to the first elevator compartment. In an embodiment, the elevator compartments are in entirely separate elevator cars and thus a first elevator car may have a first elevator compartment and a second elevator car may have a second elevator compartment.

Additionally, a fourth sensor 140d may be located within the hoistway. Advantageously, this fourth sensor 140d may be utilized for health monitoring of the elevator system. In one example, this fourth sensor 140d may be utilized to examine components of the elevator system 10 within the hoistway by a mechanic via any monitor 130a-130d. In another example, the fourth sensor 140d may gather thermal imaging data to detect when components are getting too hot and show this information as graphical data or a thermal image to a mechanic through a fourth monitor 130d.

As mentioned, the control system 110 is configured to analyze the captured data from the sensors 140a-140d and determine information in response to the captured data to be displayed on the monitors 130a-130d. The information determined is what, how, and where the data captured gets displayed on each of the monitors. As mentioned above, the information is displayed on a monitor as at least one of video images, a still image, a depth map, a graphical representation, textual information, a thermal image, a thermal video image, and illustrative art. In one example, captured images may be displayed on the plurality of monitors as video images. In another example, captured images may be converted into illustrative art. The illustrative art may be cartoon animations that represent objects in the elevator car. In one embodiment, the displayed information may be a cartoon animation illustrating a number of passengers at a selected location using cartoon figures. The selected location may be at least one of an elevator compartment 23a, 23b and/or elevator lobby 100. For example, the illustrative art may draw stick figures where people are located and boxes where luggage is located. Advantageously, illustrative art may be useful when privacy concerns limit the use of actual images. Also advantageously, the cartoon animations may display how crowded an elevator compartment 23a, 23b or lobby 100 is by showing one cartoon figure for every person. In yet another example the sensors may gather 3D depth data, which may be displayed on monitors as a depth map. In an embodiment, the displayed information may be a graphical representation, such as, for example a chart or a graph. In another embodiment, the displayed information may be a chart illustrating an elevator compartment occupancy status using at least one of a first color representing the percentage of unoccupied space in the elevator compartment and a second color representing the percentage of occupied space in the compartment. In one example, the chart may be a pie chart.

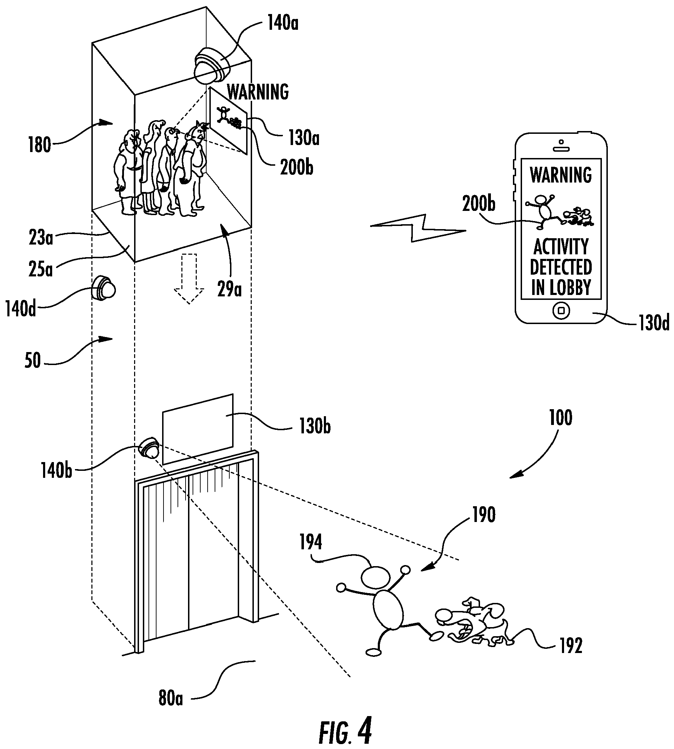

The data gathered by each sensor may need to be analyzed to determine what the sensor is detecting. For instance, acoustic data may need to be analyzed to determine what is making the sound. Acoustic data may include structural vibrations and ultrasound imaging. The controller may also determine which monitor 130a-130d to display the information on. Additionally, the controller may display the information as textual information such as for example, "WARNING", "The elevator car is delayed on Floor..", and/or any other information to explain the operation of the elevator system 10. In the example of FIG. 4 to be discussed further later, the first sensor 140a may capture the sound of barking in the first elevator compartment 25a and then the control system 110 may determine that a dog 192 was making the barking sound and display textual information on the second monitor 130b warning that a dog may be present in the first elevator compartment 25a. An audio recording may also accompany the textual information, which reads the textual information out loud.

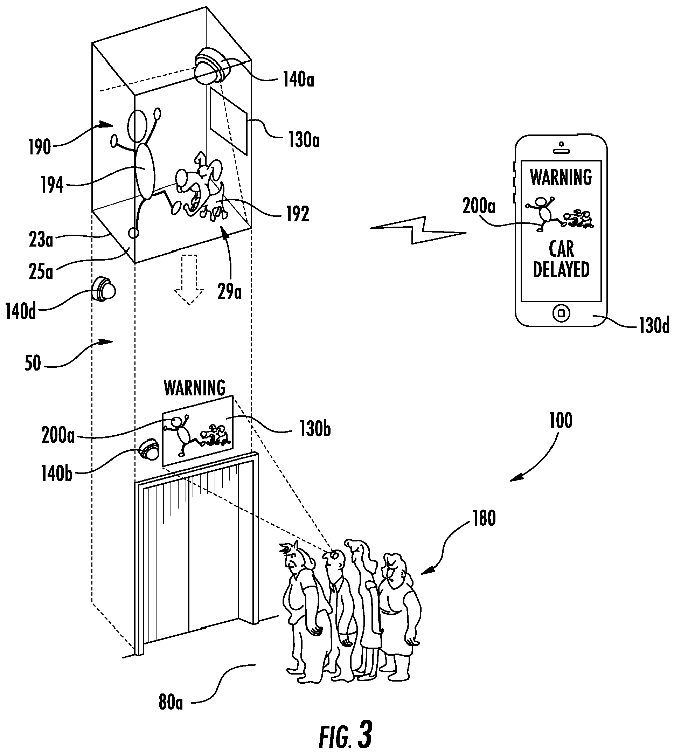

FIGs. 3-5 display examples of how the plurality of sensors, the plurality of monitors, and the controller may be utilized to detect data, analyze the data, determine information from the data and then display that information. In the example illustrated in FIG. 3, the lobby 100 includes a second monitor 130b configured to display information 200a gathered from the first sensor 140a within the first elevator compartment 25a. In an embodiment, the information 200a may be video images from the first sensor 140a, which show the interior 29a of the first elevator car 23a that will be stopping at the floor 80. Advantageously, as seen in FIG. 3, the information 200a displayed on the second monitor 130b may alert passengers 180 waiting in the lobby 100 of an event 190 in the first elevator car 23a that will be stopping at their floor 80 (i.e. the destination floor of the elevator 80a of the elevator car 23). In the example of FIG. 3, the event is a dog 192 barking at a person 194. The event 190 is captured by the first sensor 140a and displayed on the second monitor 130b at the destination floor 80a to notify passengers 180 of the event 190 that may be arriving at their floor 80. In another example, the event 190 may be a robber waiting to mug the passengers 180. Passengers 180 in the lobby 100 may then make the decision to leave the lobby 100 to avoid the event 190 in the elevator car 23. Additionally, by displaying information 200a regarding the interior 29a of the first elevator car 23a on the second monitor 130b, passengers 180 may have a better idea of what is delaying the first elevator car 23a. For instance, a particular passenger may require extra time to board the first elevator car 23a and delay the arrival of the first elevator car 23a at the destination floor 80a. In an embodiment, each elevator system 10 may have one or more dedicated third monitors 130c located in the lobby 100. In another embodiment, there may be one second monitor 130b for each lobby 100, which is shared by multiple elevator systems 10. In another embodiment, the information 200a determined from the data gathered by the first sensor 140a may also be transmitted to a fourth monitor 130d and displayed on the fourth monitor 130d. As mentioned above, the fourth monitor 130d may be a display screen such as, for example a computer monitor, a television screen, or a patterned sign with backlights to illuminate different parts of the sign. In an embodiment, the fourth monitor 130d may be remotely connected to the plurality of sensors. There remote connection allows the fourth monitor 130d to be located away from the elevator system 10, such as, for example in building guard station or in another building. The remote connection also allows the fourth monitor 130d to be a mobile device. In another embodiment, the fourth monitor 130d is a mobile device such as, for example, a cellular phone, a smart watch, a tablet, a laptop computer or similar device known to one of skill in the art.

In the example illustrated in FIG. 4, the first elevator car 23a also includes a first monitor 130a configured to display information 200b. In an embodiment, the information 200b may be video images from a second sensor 140b and show the lobby 100 at the destination floor 80a. Advantageously, as seen in FIG. 4, the information 200b regarding the lobby 100 at the destination floor 80a may alert passengers 180 in the first elevator car 23a of an event 190 in the lobby 100 where the first elevator car 23a will be stopping. In the example of FIG. 4, the event 190 is a dog 192 barking at a person 194. The event 190 is captured by the second sensor 140b and displayed on the first monitor to notify passengers 180 within the first elevator car 23a of the event 190 that may be waiting for them when they arrive at the destination floor 80a. In another example, the event 190 may be a robber waiting to mug the passengers 180. Passengers 180 within the first elevator car 23a may then make the decision to get off at another floor or press an alarm button. In another embodiment, the information 200b determined from the data gathered by the second sensor 140b may also be displayed on a fourth monitor 130d. In an embodiment, the fourth monitor 130d is a mobile device such as, for example, a cellular phone, a smart watch, a tablet, a laptop computer or similar device known to one of skill in the art.

In the example illustrated in FIG. 5, there are multiple elevator cars 23a, 23b and the monitor 130a, 130c may display information determined from data from the interior 29a, 29b of the other elevator car compartment 25a, 25b. As described above, the elevator car may have multiple compartments or the other compartment may be in an entirely separate elevator car. As seen in FIG. 5, there may be a first elevator car 23a having a first sensor 140a and a first monitor 130a, as well as a second elevator car 23b having a third sensor 140c and a third monitor 130c. The first sensor 140a is located in a first elevator compartment 25a of the first elevator car 23a. The first sensor 140a is configured to capture data from the interior 29a of the first elevator compartment 25a. The third sensor 140c is located in a second elevator compartment 25b of the second elevator car 23. The third sensor 140c is configured to capture data from the interior 29b of the second elevator compartment 25b. As may be appreciated by one of skill in the art, FIG. 5 displays the two compartments 25a, 25b being located in separate elevator cars however the two compartments may be integrally attached and located in the same elevator car, such as for example a double-deck elevator car. In an embodiment, the first monitor 130a is configured to display the information 200c determined from the data gathered by the third sensor 140c of the interior 29b of the second elevator compartment 25b.

In the example of FIG. 5, the first elevator car 23a may be transporting passengers 180a to an elevator lobby 100 on a destination floor 80a and the second elevator car 23b may be delayed by as a passenger 180b requiring additional assistance to exit the elevator car 23b. By displaying information 200c determined from the data gathered by the third sensor 140c of the interior 29b of the second elevator compartment 25b on the first monitor 130a, passengers 180a in the first elevator compartment 25a may have a better idea of what is delaying their own elevator car 23a. In another embodiment, the information 200c determined from data gathered by the third sensor 140c may also be displayed on a fourth monitor 130d. In an embodiment, the fourth monitor 130d may be a mobile device such as, for example, a cellular phone, a smart watch, a tablet, a laptop computer or similar device known to one of skill in the art.

The control system 110 is operably connected to the controller 30 of each elevator system 10. The control system 110 is configured to the control and coordinate operation of multiple elevator systems 10. The control system 110 may coordinate the operation of the sensors 140a-140d and the monitors 130a-130d. In one example, multiple sensors 140a, 140c in elevator compartments 25a, 25b may need to communicate with one second monitor 130b in the lobby 100, if that is the second monitor 130b in the lobby 100. Thus, the second monitor 130b may display alternating information from different sensors 140a, 140c in different elevator compartments 25a, 25b. The control system 110 may be an electronic controller including a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

Further, as illustrated in FIG. 2, the elevator system 10 may also comprise a control device 300 that is wired and/or wirelessly connected to the control system 110. The control device 300 may be remotely located away from elevator system 10 or within the same building. The control device 300 is configured to disable and enable at least one of the plurality of sensors and the plurality of monitors. Advantageously, the control device may be used by select VIPs to maintain their privacy in the elevator system 10 by allowing them to selectively enable and/or disable the plurality of sensors and the plurality of monitors. Also advantageously, the control device 300 may be utilized by building managers to control the operation of the plurality of sensors and the plurality of monitors. The control device 300 may be an electronic device such as for example, a desktop computer, a laptop computer, a smart watch, a cellular phone or similar device known to one of skill in the art.

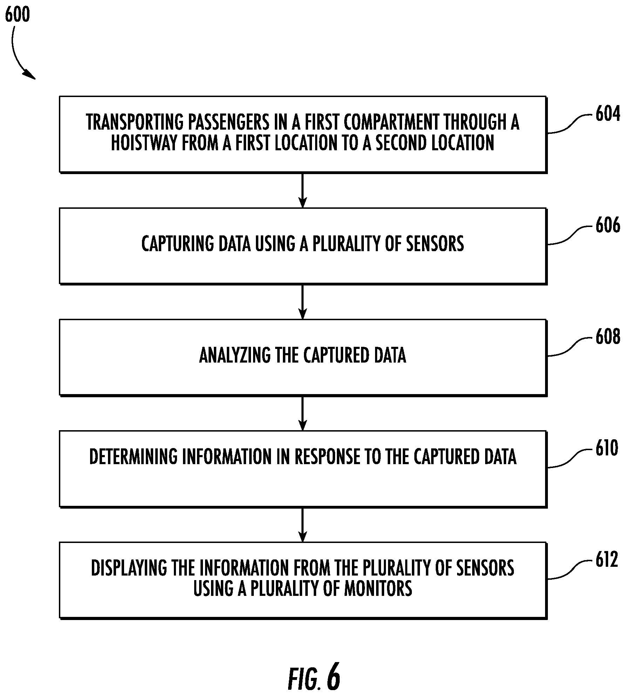

Referring now to FIG. 6, with continued reference to FIGs. 1-4. FIG. 6 shows a flow chart of method 600 of operating the elevator system 10 of FIGS. 1-4, in accordance with an embodiment of the disclosure. At block 604, passengers are transported in a first elevator compartment 25a through a hoistway 50 from a first location to a second location. For example, the first location may be any floor of the building and the second location may be an elevator lobby 100 on a destination floor 80a. At block 606 data is captured using a plurality of sensors. The plurality of sensors comprises at least one of a first sensor 140a located in the first elevator compartment 25a, a third sensor 140c located in a second elevator compartment 25b, a second sensor 140b located in the elevator lobby 100 and a fourth sensor 140d located in the hoistway 50. In an embodiment, the data captured is at least one of video images, a still image, 3D depth data, acoustic data, weight data, and infrared thermography. In an embodiment, the fourth sensor 140d is outside of the first elevator compartment 25a, outside of the second elevator compartment 25b, and inside of the hoistway 50. As mentioned above, the two elevator compartments 25a, 25b may be located in the same elevator car or in a different elevator car. In an embodiment, the second elevator compartment 25b is located in a second elevator car 23b separate from the first elevator car 23a. In another embodiment, the second elevator compartment 25b is located in the first elevator car 23a, such that the second elevator compartment 25b is integrally attached to the first elevator compartment 25a.

At block 608, the captured data is analyzed using a controller 110. At block 610, information is determined in response to the captured data using the controller 110. At block 612, the information determined from data captured is displayed using a plurality of monitors. The plurality of monitors comprises at least one of a first monitor 130a located in the first elevator compartment 25a, a third monitor 130c located in the second elevator compartment 25b, a second monitor 130b located in the elevator lobby 100, and a fourth monitor 130d remotely connected to the plurality of sensors. In an embodiment, the displayed information is at least one of video images, a still image, a depth map, a graphical representation, textual information, a thermal image, a thermal video image, and illustrative art. In an embodiment, the fourth monitor 130d is a mobile device configured to display the information. In another embodiment, the data captured are video images from the first sensor 140a located in the first elevator compartment 25a and the displayed information are video images that are being displayed on the third monitor 130b located in the second elevator compartment 25b. In yet another embodiment, the elevator system 10 further comprises a control device 300 configured to disable and enable at least one of the plurality of sensors and the plurality of monitors.

While the above description has described the flow process of FIG. 6 in a particular order, it should be appreciated that unless otherwise specifically required in the attached claims that the ordering of the steps may be varied.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An elevator system comprising:
a first elevator car compartment configured to transport passengers through a hoistway from a first location to a second location;
a plurality of sensors configured to capture data, the plurality of sensors comprising at least one of a first sensor located in the first elevator compartment and a second sensor located in an elevator lobby;
a control system configured to analyze the captured data and determine information in response to the captured data; and
a plurality of monitors configured to display the information from the plurality of sensors, the plurality of monitors comprising at least one of a first monitor located in the first elevator compartment and a second monitor located in the elevator lobby.

2. The elevator system of claim 1, wherein the plurality of sensors further comprise:
at least one of a third sensor located in a second elevator compartment and a fourth sensor located in the hoistway, wherein, optionally:
the fourth sensor is located outside of the first elevator compartment, outside of the second elevator compartment, and inside of the hoistway.

3. The elevator system of claim1 or 2, wherein the plurality of monitors further comprise:
at least one of a third monitor located in a second elevator compartment and a fourth monitor remotely connected to the plurality of sensors, wherein,
optionally:
the fourth monitor is a mobile device configured to display the information.

4. The elevator system of claim 1, 2 or 3, wherein:
the data captured is at least one of video images, a still image, 3D depth data, acoustic data, weight data, and infrared thermography.

5. The elevator system of any preceding claim, wherein:
the displayed information is at least one of video images, a still image, a depth map, a graphical representation, textual information, a thermal image, a thermal video image, and illustrative art.

6. The elevator system of any of claims 2 to 5, wherein:
the second elevator compartment is located in a second elevator car separate from the first elevator car; or
the second elevator compartment is located in the first elevator car, the second elevator compartment being integrally attached to the first elevator compartment.

7. The elevator system of any preceding claim, further comprising:
a control device configured to disable and enable at least one of the plurality of sensors and the plurality of monitors.

8. The elevator system of any of claims 3 to 7, wherein:
the data captured are video images from the first sensor located in the first elevator compartment; and
the displayed information are video images, the video images being displayed on the third monitor located in the second elevator compartment.

9. The elevator system of any preceding claim, wherein:
the displayed information includes a cartoon animation illustrating a number of passengers at a selected location using cartoon figures.

10. The elevator system of any preceding claim, wherein:
the displayed information includes a chart illustrating an elevator compartment occupancy status using at least one of a first color representing the percentage of unoccupied space in the elevator compartment and a second color representing the percentage of occupied space in the compartment.

11. A method of operating an elevator system comprising:
transporting passengers in a first elevator compartment through a hoistway from a first location to a second location;
capturing data using a plurality of sensors, the plurality of sensors comprising at least one of a first sensor located in the first elevator compartment and a second sensor located in an elevator lobby;
analyzing the captured data;
determining information in response to the captured data; and
displaying the information from the plurality of sensors using a plurality of monitors, the plurality of monitors comprising at least one of a first monitor located in the first elevator compartment and a second monitor located in the elevator lobby.

12. The method of claim 11, wherein the plurality of sensors further comprise:
at least one of a third sensor located in a second elevator compartment and a fourth sensor located in the hoistway, wherein optionally:
the fourth sensor is located outside of the first elevator compartment, outside of the second elevator compartment, and inside of the hoistway.

13. The method of claim 11 or 12, wherein the plurality of monitors further comprise:
at least one of a third monitor located in a second elevator compartment and a fourth monitor remotely connected to the plurality of sensors, wherein optionally:
the fourth monitor is a mobile device configured to display the information.

14. The method of claim 11, 12 or 13, wherein:
the data captured is at least one of video images, a still image, 3D depth data, acoustic data, weight data, and infrared thermography.

15. The method of any of claims 11 to 14, wherein:
the displayed information is at least one of video images, a still image, a depth map, a graphical representation, textual information, a thermal image, a thermal video image, and illustrative art.
